(19) **Europäisches Patentamt**
**European Patent Office**
**Office européen des brevets**

(11) **EP 4 765 263 A1**

(12) **EUROPEAN PATENT APPLICATION**
published in accordance with Art. 153(4) EPC

(43) Date of publication:
**24.06.2026 Bulletin 2026/26**

(21) Application number: **24879290.5**

(22) Date of filing: **24.10.2024**

(51) International Patent Classification (IPC):
$H01M\ 10/04$ (2006.01)     $H01M\ 4/525$ (2010.01)
$H01M\ 4/505$ (2010.01)     $H01M\ 4/38$ (2006.01)
$H01M\ 4/36$ (2006.01)     $H01M\ 4/02$ (2006.01)

(52) Cooperative Patent Classification (CPC):
**H01M 4/02; H01M 4/36; H01M 4/38; H01M 4/505;**
**H01M 4/525; H01M 10/04; Y02E 60/10; Y02P 70/50**

(86) International application number:
**PCT/IB2024/060466**

(87) International publication number:
**WO 2025/083668 (24.04.2025 Gazette 2025/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.10.2023 KR 20230141417**
**30.08.2024 KR 20240118139**

(71) Applicant: **LG Energy Solution, Ltd.**
**Seoul 07335 (KR)**

(72) Inventors:
• **JEON, Hyung Joon**
**Daejeon 34122 (KR)**

• **TAKEUCHI, Takashi**
**Daejeon 34122 (KR)**
• **LEE, Yun Ju**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

Remarks:
The filing date of the international application is
within two months from the date of expiration of the
priority period (R. 26bis.3 PCT)

(54) **CYLINDRICAL SECONDARY BATTERY AND METHOD FOR MANUFACTRURING SAME**

(57)     The present invention relates to a cylindrical secondary battery including an electrode assembly in which a positive electrode plate, a negative electrode plate, and a separator disposed between the positive electrode plate and the negative electrode plate are wound in one direction; a battery can in which the electrode assembly is accommodated; an electrolyte solution injected into the battery can; and a sealing body which seals an open end portion of the battery can, wherein an impregnation rate of propylene carbonate (PC) in the positive electrode plate is equal to or greater than a reference rate, and a positive electrode active material in a single particle form is applied to the positive electrode plate, and the present invention relates to a preparation method of the cylindrical secondary battery.

[FIG. 1]

**Description**

**TECHNICAL FIELD**

**Cross-reference to Related Applications**

This application claims the benefit of Korean Patent Application Nos. 10-2023-0141417, filed on October 20, 2023, and 10-2024-0118139, filed on August 30, 2024, the disclosures of which are incorporated herein in its entirety by reference.

**Technical Field**

The present invention relates to a cylindrical secondary battery and a preparation method of the same, and more particularly, to a cylindrical secondary battery capable of achieving excellent stability and electrolyte solution impregnation despite increased volume, and a preparation method of the same.

**BACKGROUND ART**

With technological development of electric vehicles, mobile devices, and the like, demand for a secondary battery is rapidly increasing as a source of energy. In particular, due to technological development of the electric vehicles, demand for a high-capacity battery, such as a large-sized cylindrical battery with large volume, is increasing. However, in case of applying a conventional small-sized cylindrical battery specification to the large-sized cylindrical battery as it is, problems in battery stability and performance may be caused.

For example, due to enlargement of an electrode, the large-sized cylindrical battery may have increased resistance and gas generation, which may affect largely on the battery stability. In addition, due to an increased diameter of the battery, electrolyte solution impregnation may decrease, which may hinder exhibition of battery performance.

Therefore, it is required to develop a cylindrical battery having high stability and electrolyte solution impregnation while having a large volume that allows high capacity.

**DISCLOSURE OF THE INVENTION**

**TECHNICAL PROBLEM**

The present invention is to solve the above-described problems, and is to provide a cylindrical secondary battery capable of achieving high safety and excellent electrolyte solution impregnation despite an increased volume of the cylindrical battery, and to provide a preparation method of the cylindrical secondary battery.

**TECHNICAL SOLUTION**

[1] The present invention includes an electrode assembly in which a positive electrode plate, a negative electrode plate, and a separator disposed between the positive electrode plate and the negative electrode plate are wound in one direction; a battery can in which the electrode assembly is accommodated; an electrolyte solution which is injected into the battery can; and a sealing body which seals an open end portion of the battery can. At this time, the present invention provides a cylindrical secondary battery in which the positive electrode plate includes a positive electrode active material layer formed on a positive electrode current collector, and an impregnation rate represented by [Equation 1] below, measured by injecting propylene carbonate to the positive electrode plate, is 13.05 mm$^3$/sec or greater.

$$[\text{Equation 1}]$$

$$\text{Impregnation rate} = \frac{(P_c/100) \times \eta_{pc} \times V_{pc}}{L_c \times T_c}$$

In Equation 1 above,

$P_c$ is a porosity (%) of the positive electrode active material layer, $\eta_{pc}$ is a viscosity (mg/mm · sec) of the propylene carbonate, $V_{pc}$ is an injection amount ($mm^3$) of the propylene carbonate, $L_c$ is a loading amount ($mg/2500\ mm^2$) of the positive electrode active material layer, and $T_c$ is a thickness (mm) of the positive electrode active material layer.

[2] The present invention provides the cylindrical secondary battery of [1] above, wherein the positive electrode active material layer includes a first positive electrode active material in a single particle form containing 30 or less nodules, and an average particle diameter $D_{50}$ of the first positive electrode active material is 3 μm to 8 μm.

[3] The present invention provides the cylindrical secondary battery of [2] above, wherein the nodules have an average particle diameter $D_{50}$ of 0.5 μm to 5 μm.

[4] The present invention provides the cylindrical secondary battery of [2] above, wherein the first positive electrode active material includes a lithium nickel-based oxide represented by Chemical Formula 1 below:

[Chemical Formula 1]     $Li_aNi_bCO_cM^1_dM^2_eO_2$

In Chemical Formula 1 above, $M^1$ is Mn, Al, or a combination thereof, $M^2$ is one or more selected from the group consisting of Zr, W, Ti, Mg, Ca, Sr, and Ba, and $0.8 \le a \le 1.2$, $0.8 \le b < 1$, $0 < c < 0.2$, $0 < d < 0.2$, and $0 \le e \le 0.1$.

[5] The present invention provides the cylindrical secondary battery of [2] above, wherein the positive electrode active material layer further includes a second positive electrode active material in a secondary particle form, the second positive electrode active material has a form of aggregation of primary particles, and an average particle diameter of the second positive electrode active material is 10 μm to 20 μm.

[6] The present invention provides the cylindrical secondary battery of at least one of [1] to [5] above, wherein the positive electrode active material layer has a bimodal particle size distribution on a cumulative volume particle size distribution graph.

[7] The present invention provides the cylindrical secondary battery of at least one of [1] to [6] above, wherein the positive electrode active material layer has a porosity ($P_c$) of 20% to 30%.

[8] The present invention provides the cylindrical secondary battery of at least one of [1] to [7] above, wherein the positive electrode active material layer has a loading amount ($L_c$) of 600 $mg/2500\ mm^2$ to 700 $mg/2500\ mm^2$.

[9] The present invention provides the cylindrical secondary battery of at least one of [1] to [8] above, wherein the negative electrode plate includes a silicon-based negative electrode active material.

[10] The present invention provides the cylindrical secondary battery of at least one of [1] to [9] above, wherein a form factor ratio is 0.4 or greater.

[11] The present invention provides the cylindrical secondary battery of at least one of [1] to [10] above, wherein the cylindrical secondary battery is a 46110 cell, a 4875 cell, a 48110 cell, a 4880 cell, or a 4680 cell.

[12] The present invention provides a preparation method of a cylindrical secondary battery including preparing a positive electrode plate (S10); injecting propylene carbonate (PC) into the positive electrode plate to measure an impregnation rate ($mm^3/sec$) represented by [Equation 1] below (S20); disposing a separator between the positive electrode plate in which the impregnation rate, represented by [Equation 1] below, is equal to or greater than a reference rate, and a negative electrode plate, and then winding to form an electrode assembly (S30); accommodating the electrode assembly in a battery can including an open end portion on an upper part (S40); injecting an electrolyte solution into the battery can in which the electrode assembly is accommodated (S50); and sealing the open end portion of the battery can with a sealing body (S60).

[Equation 1]

$$\text{Impregnation rate} = \frac{(P_c\ /100)\ \times\ \eta_{pc}\ \times\ V_{pc}}{L_c\ \times\ T_c}$$

In Equation 1 above,
$P_c$ is a porosity (%) of the positive electrode active material layer, $\eta_{pc}$ is a viscosity (mg/mm · sec) of the propylene carbonate, $V_{pc}$ is an injection amount ($mm^3$) of the propylene carbonate, $L_c$ is a loading amount ($mg/2500\ mm^2$) of the positive electrode active material layer, and $T_c$ is a thickness (mm) of the positive electrode active material layer.

[13] The present invention provides the preparation method of the cylindrical secondary battery of [12] above, wherein the reference rate is 13.05 $mm^3/sec$.

## ADVANTAGEOUS EFFECTS

Since a cylindrical secondary battery according to the present invention has a positive electrode active material in a single particle form applied therein, particle fracture during an electrode preparation and gas generation during charging and discharging may be minimized, and therefore, even a large-sized cylindrical battery with an increased volume may achieve excellent stability.

In addition, since a positive electrode plate, having an impregnation rate of propylene carbonate of 13.05 $mm^3$/sec or more, is applied to the cylindrical secondary battery according to the present invention, even a large-sized cylindrical battery including a positive electrode active material in a single particle form and having an increased volume may achieve excellent performance.

Effects that may be obtained from example embodiments of the present invention are not limited to the above-mentioned effects, and from the following description, other effects not mentioned herein may be clearly derived and understood by those skilled in the art to which the example embodiments of the present disclosure pertain. That is, unintended effects resulting from carrying out the example embodiments of the present disclosure may also be derived by those skilled in the art from the example embodiments of the present disclosure.

## BRIEF DESCRIPTION OF THE DRAWINGS

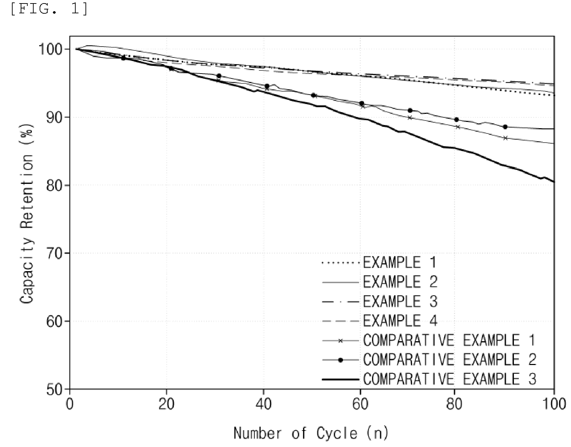

FIG. 1 is a drawing showing results of measuring capacity retention rates of positive electrode plates according to Examples 1 to 4 and Comparative Examples 1 to 3.

## MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

It will be further understood that the terms 'include', 'provide', 'have' or the like, when used in this specification, specify the presence of stated features, integers, steps, elements, or a combination thereof, but do not preclude the presence or addition of one or more other features, integers, steps, elements, or a combination thereof.

In this specification, a positive electrode active material in a "single particle form" refers to a single particle and a similar-single particle, the single particle is a particle composed of a single nodule, and the similar-single particle refers to a composite particle formed of 30 or less nodules.

In this specification, the "nodule" refers to a particle unit body composing a single particle and a similar-single particle, and the nodule may be a single crystal which is lack of a crystalline grain boundary, or a polycrystal in which a grain boundary is not present in appearance when observed with 5000 times to 20000 times magnification using a scanning electron microscope (SEM).

In this specification, a "secondary particle" refers to a particle formed by aggregation of tens to hundreds of primary particles in plurality. More particularly, the secondary particle is an aggregate of 40 or more primary particles.

The expression "particle", used in this specification, may include any one or all of a single particle, a similar-single particle, a primary particle, a nodule, and a secondary particle.

In this specification, an "average particle diameter $D_{50}$" refers to a particle size at 50% of a cumulative volume in a particle size distribution of positive electrode active material powder. When a lithium composite transition metal oxide is a secondary particle, the average particle diameter refers to an average particle diameter of secondary particles, and when the lithium composite transition metal oxide is a mixture of a single-particle and a similar-single particle, the average particle diameter refers to an average particle diameter of a particle in combination thereof. The average particle diameter $D_{50}$ may be measured using a laser diffraction method. For example, after the positive electrode active material powder is dispersed in a dispersion medium, the dispersion medium is introduced into a commercial laser diffraction particle size measurement instrument (e.g., Microtrac MT 3000) and irradiated with ultrasonic waves of about 28 kHz at an output of 60 w, and then a cumulative-volume particle size distribution graph is obtained, and the particle size corresponding to 50% of the cumulative volume may then be calculated therefrom.

A cylindrical secondary battery according to the present invention may be a large-sized cylindrical secondary battery including a positive electrode plate with a first positive electrode active material in a single particle form and a second positive electrode active material in a secondary particle form being applied. The positive electrode active material in a single particle form is excellent in rolling characteristics, but has a disadvantage that an initial operating voltage is high. On the contrary, the positive electrode active material in a secondary particle form has a relatively low initial resistance, but when it is pressed, particle fracture may occur. Therefore, by applying the first positive electrode active material and the second positive electrode active material to the cylindrical secondary battery, the present invention is to provide a cylindrical secondary battery which is excellent in rolling characteristics and has low initial resistance.

Meanwhile, due to enlargement and a single particle application, the positive electrode plate may have a decreased porosity and decreased electrolyte solution impregnation. When the electrolyte solution impregnation is low, ionic conductivity is at a low level, causing performance deterioration of the secondary battery. That is, the electrolyte solution impregnation is an important factor that is necessarily considered when preparing a large-sized cylindrical battery with stability and excellent performance.

By designing Equation 1 below representing an impregnation rate of electrolyte solution and a cylindrical secondary battery in which the impregnation rate, derived by Equation 1 below, satisfies the rate in a certain level or higher, the present invention is to provide a cylindrical secondary battery with excellent impregnation even though it is a large-sized battery with an increased volume.

$$[\text{Equation 1}]$$

$$\text{Impregnation rate} = \frac{(P_c\ /100) \times \eta_{pc} \times V_{pc}}{L_c \times T_c}$$

In Equation 1 above,

$P_c$ is a porosity (%) of the positive electrode active material layer, $\eta_{pc}$ is a viscosity (mg/mm · sec) of the propylene carbonate, $V_{pc}$ is an injection amount (mm$^3$) of the propylene carbonate, $L_c$ is a loading amount (mg/2500 mm$^2$) of the positive electrode active material layer, and $T_c$ is a thickness (mm) of the positive electrode active material layer.

Hereinafter, the present invention will be described in detail.

**Cylindrical Secondary Battery**

A cylindrical secondary battery according to the present invention includes an electrode assembly in which a positive electrode plate, a negative electrode plate, and a separator disposed between the positive electrode plate and the negative electrode plate are wound in one direction; a battery can in which the electrode assembly is accommodated; an electrolyte solution which is injected into the battery can; and a sealing body which seals an open end portion of the battery can.

The cylindrical secondary battery according to the present invention may be a large-sized cylindrical battery having a form factor ratio (defined as a value obtained by dividing the diameter by the height of the cylindrical secondary battery, that is, the ratio of the diameter (Φ) to the height (H)) of 0.4 or greater. Here, the form factor refers to a value representing the diameter and height of the cylindrical battery.

The cylindrical secondary battery according to the present invention may be, for example, a 46110 cell (diameter 46 mm, height 110 mm, and form factor ratio 0.418), a 4875 cell (diameter 48 mm, height 75 mm, and form factor ratio 0.640), a 48110 cell (diameter 48 mm, height 110 mm, and form factor ratio 0.436), a 4880 cell (diameter 48 mm, height 80 mm, and form factor ratio 0.600), a 4680 cell (diameter 46 mm, height 80 mm, and form factor ratio 0.575). In the numerical value representing the form factor, the first 2 numbers refer to a diameter of the cell, and the next 2 or 3 numbers refer to a height of the cell.

Preferably, the cylindrical secondary battery according to the present invention may be a battery in a tab-less structure not including an electrode tab, but is not limited thereto. The battery in the tab-less structure may have a structure in which, for example, each of the positive electrode plate and the negative electrode plate includes a non-coated part having no active material layer being formed, the non-coated part of the positive electrode plate and the non-coated part of the negative electrode plate are respectively positioned on an upper side and a lower side of an electrode assembly, a current collector plate is bonded to each of the non-coated part of the positive electrode plate and the non-coated part of the negative electrode plate, and the current collector plate is connected to an electrode terminal.

In case of having the tab-less structure as previously described, the cylindrical secondary battery may have less concentration of current, compared to a conventional battery including an electrode tab, so that heat inside the battery may be effectively reduced, and accordingly, effect on improving thermal stability of the battery may be achieved.

Hereinafter, each component of the cylindrical secondary battery according to the present invention is described in more detail.

**Electrode Assembly**

The electrode assembly according to the present invention is a jelly-roll-type electrode assembly having a structure in which a positive electrode plate, a negative electrode plate, and a separator disposed between the positive electrode plate and the negative electrode plate are wound in one direction.

**(1) Positive Electrode Plate**

The positive electrode plate according to the present invention includes a positive electrode active material layer formed on a positive electrode current collector.

As the positive electrode current collector, various positive electrode current collectors that are used in the relevant art may be applied. For example, for the positive electrode current collector, stainless steel, aluminum, nickel, titanium, calcined carbon, or aluminum or stainless steel that is surface-treated with carbon, nickel, titanium, silver, etc. may be used. The positive electrode current collector may generally have a thickness of 3 $\mu$m to 500 $\mu$m, and microscopic irregularities may be formed on a surface of the positive electrode current collector to improve adhesion of the positive electrode active material. The positive electrode current collector may be used in various shapes, for example, a film, a sheet, a foil, a net, a porous body, a foam body, etc.

Property of the positive electrode plate may vary according to the shape of a positive electrode active material particle, the particle diameter of the positive electrode active material, or composition of the positive electrode active material. The positive electrode active material layer according to the present invention may include a first positive electrode active material and a second positive electrode active material as an active material.

The first positive electrode active material according to the present invention may be a positive electrode active material in a single particle form including 30 or less nodules. By using the positive electrode active material in a single particle form, a large-sized cylindrical secondary battery may have improved stability. In particular, the positive electrode active material in a single particle form of one nodule or in a similar-single particle form in which 30 or less nodules are aggregated has higher particle strength than a conventional positive electrode active material in a secondary particle form in which tens to hundreds of primary particles are aggregated, and thus, has less particle fracture occurring when pressed.

In case of the first positive electrode active material according to the present invention, the number of nodules constituting a particle is small, so that there are little changes caused by volume expansion and contraction of the nodules in charging and discharging, and accordingly, occurrence of cracks inside the particle is significantly reduced. Therefore, in case of using the positive electrode active material in a single particle form, according to the present invention, the amount of gas generation, due to occurrence of particle fracture and cracks inside the particle, may be significantly decreased, and accordingly, excellent safety may be achieved even in the large-sized cylindrical battery.

The second positive electrode active material according to the present invention is a secondary particle form, which may have a form of aggregation of primary particles. When the second positive electrode active material is mixed in the first positive electrode active material, initial resistance may be lower than a case in which the first positive electrode active material is used alone. Accordingly, operating voltage may be lowered, and temperature rise in a secondary battery may be prevented.

By including the first positive electrode active material and the second positive electrode active material, the positive electrode active material according to the present invention may provide a positive electrode plate excellent in performance. In an example embodiment, a volume ratio of the first positive electrode active material and the second positive electrode active material may be 3:7 to 7:3. In an example embodiment, a volume ratio of the first positive electrode active material and the second positive electrode active material may be 4:6 to 6:4. When the volume ratio of the first positive electrode active material and the second positive electrode active material falls within the above ranges, the positive electrode plate with excellent rolling characteristics and low operating voltage may be achieved.

The positive electrode active material layer according to the present invention may have a bimodal particle size distribution on a cumulative volume particle size distribution graph. The first positive electrode active material and the second positive electrode active material, included in the positive electrode active material layer, may have different average particle diameters. By applying the first positive electrode active material and the second positive electrode active material having different average particle diameters to the positive electrode plate, the positive electrode plate with improved energy density per volume may be achieved. For example, when the first positive electrode active material in a small particle and the second positive electrode active material in a large particle are used in an appropriate ratio, due to bimodal effect, the density is higher than a value arithmetically calculated from the density values of large/small particles in the condition of same pressure.

The average particle diameter of the nodules included in the first positive electrode active material, according to the present invention, may be 0.5 $\mu$m to 5 $\mu$m. In an example embodiment, the average particle diameter of the nodules is 0.5 $\mu$m to 3 $\mu$m. In an example embodiment, the average particle diameter of the nodules is 0.8 $\mu$m to 2.5 $\mu$m. In an example embodiment, the average particle diameter of the nodules is 0.8 $\mu$m to 1.5 $\mu$m. When the average particle diameter of the nodules falls within the above ranges, the first positive electrode active material with excellent electrochemical characteristics may be formed. If the average particle diameter of the nodules is too small, the number of nodules aggregated to form a lithium nickel-based oxide particle becomes large, so that effect of suppressing occurrence of particle fracture in rolling is reduced, and if the average particle diameter of the nodules is too large, the path of lithium dispersion inside the nodule becomes long, so that the resistance may increase, and output characteristics may deteriorate.

The average particle diameter $D_{50}$ of the first positive electrode active material, according to the present invention, may be 3 $\mu$m to 8 $\mu$m. In an example embodiment, the average particle diameter $D_{50}$ of the first positive electrode active material may be preferably 3 $\mu$m to 5 $\mu$m. If $D_{50}$ of the first positive electrode active material is too small, formation of the active material layer is difficult in an electrode preparation, and the electrolyte solution impregnation is reduced, so that the electrochemical property is reduced, and if $D_{50}$ is too large, there are problems that the resistance increases and output characteristics deteriorate.

The average particle diameter of the second positive electrode active material, according to the present invention, may be 10 $\mu$m to 20 $\mu$m. In an example embodiment, the average particle diameter of the second positive electrode active material, according to the present invention, may be 10 $\mu$m to 18 $\mu$m. In an example embodiment, the average particle diameter of the second positive electrode active material, according to the present invention, may be 13 $\mu$m to 18 $\mu$m. In the second positive electrode active material having the average particle diameter falling within the above ranges, an initial resistance may not be high, and occurrence of particle fracture may be suppressed.

The first positive electrode active material and the second positive electrode active material, according to the present invention, may include a lithium nickel-based oxide. The lithium nickel-based oxide may have a composition containing nickel in an amount of 80 mol% or greater, among the total metal excluding lithium, preferably 82 mol% or greater, and more preferably 83 mol% or greater, and particularly, the lithium nickel-based oxide may be a lithium nickel cobalt manganese-based oxide containing nickel in an amount of 80 mol% or greater, preferably 82 mol% or greater, and more preferably 83 mol% or greater among the total metal excluding lithium. When the amount of nickel in the lithium nickel-based oxide particle falls within the above ranges, high energy density may be achieved.

More particularly, the first positive electrode active material and the second positive electrode active material may include a lithium nickel-based oxide represented by [Chemical Formula 1] below.

[Chemical Formula 1]     $Li_aNi_bCo_cM^1_dM^2_eO_2$

In Chemical Formula 1, $M^1$ may be Mn, Al, or a combination thereof, and $M^2$ may be one or more selected from the group consisting of Zr, W, Ti, Mg, Ca, Sr, and Ba. A $M^2$ element is not necessarily included, but if included in an appropriate amount, it may serve to promote particle growth during calcination, or improve crystal-structure stability.

a above refers to a molar ratio of lithium in the lithium nickel-based oxide, where $0.8 \leq a \leq 1.2$, $0.85 \leq a \leq 1.15$, or $0.9 \leq a \leq 1.2$ may be satisfied. When the molar ratio of lithium falls within the above ranges, the crystal structure of the lithium nickel-based oxide may be stably formed.

b above refers to a molar ratio of nickel in the total metal excluding lithium in the lithium nickel-based oxide, wherein $0.8 \leq b < 1$, $0.82 \leq b < 1$, or $0.83 \leq b < 1$ may be satisfied. When the molar ratio of nickel falls within the above ranges, high energy density may be achieved, and thus, high capacity is possible.

c above refers to a molar ratio of cobalt in the total metal excluding lithium in the lithium nickel-based oxide, wherein $0 < c < 0.2$, $0 < c < 0.18$, or $0.01 \leq c \leq 0.17$ may be satisfied. When the molar ratio of cobalt falls within the above ranges, good resistance characteristics and output characteristics may be achieved.

d above refers to a molar ratio of a $M^1$ element among the total metal excluding lithium in the lithium nickel-based oxide, wherein $0 < d < 0.2$, $0 < d < 0.18$, or $0.01 \leq d \leq 0.17$ may be satisfied. When the molar ratio of the $M^1$ element falls within the above ranges, the structural stability of the positive electrode active material is excellent.

e above refers to a molar ratio of the $M^2$ element among the total metal excluding lithium in the lithium nickel-based oxide, wherein $0 \leq e \leq 0.1$, or $0 \leq e \leq 0.05$ may be satisfied.

The impregnation rate represented by [Equation 1] below, measured by injecting propylene carbonate into the positive electrode plate according to the present invention, may be 13.05 mm$^3$/sec or greater.

$$[Equation\ 1]$$

$$\text{Impregnation rate} = \frac{(P_c/100) \times \eta_{pc} \times V_{pc}}{L_c \times T_c}$$

In Equation 1 above,
$P_c$ is a porosity (%) of the positive electrode active material layer, $\eta_{pc}$ is a viscosity (mg/mm · sec) of the propylene carbonate, $V_{pc}$ is an injection amount (mm$^3$) of the propylene carbonate, $L_c$ is a loading amount (mg/2500 mm$^2$) of the positive electrode active material layer, and $T_c$ is a thickness (mm) of the positive electrode active material layer. At this time, dividing the value of $P_c$ by 100 is to eliminate %, the unit of porosity.

Through the impregnation rate calculated by Equation 1 above, the impregnation of the positive electrode plate to an electrolyte solution may be predicted. In particular, Equation 1 above represents the electrolyte solution impregnation using the loading amount and porosity of the positive electrode active material layer on the assumption that a region of electrolyte solution impregnation in the positive electrode plate is a virtual cylinder.

At this time, it is assumed that, when propylene carbonate is injected into the positive electrode plate, the propylene carbonate-impregnated region in the positive electrode active material layer forms the virtual cylinder. The height of the virtual cylinder may correspond to the thickness of the positive electrode active material layer, and the volume of the virtual cylinder may correspond to the volume of the injected propylene carbonate. Therefore, by dividing the amount of injected propylene carbonate ($V_{pc}$) by the thickness (mm) of the positive electrode active material layer, the area of the virtual cylinder, that is, the impregnation area, may be derived.

By dividing the product of the impregnation area ($V_{pc}/T_c$), the porosity ($P_c$) of the positive electrode active material layer, and the viscosity ($\eta_{pc}$) of propylene carbonate by the loading amount ($L_c$) of the positive electrode active material layer, the impregnation rate of electrolyte solution may be predicted when designing the positive electrode plate. That is, according to the present invention, since the impregnation rate of electrolyte solution is predictable when designing the positive electrode plate, a cylindrical secondary battery with improved electrolyte solution impregnation may be achieved.

The impregnation rate represented by [Equation 1] above, according to the present invention, may be 13.05 mm$^3$/sec or greater. In an example embodiment, the impregnation rate represented by [Equation 1] above may be 13.8 mm$^3$/sec or greater. The cylindrical secondary battery, in which the impregnation rate represented by [Equation 1] above falls within the above ranges, may have excellent electrolyte solution impregnation, and accordingly, the capacity retention rate may be improved.

In an example embodiment, the porosity ($P_c$) of the positive electrode active material layer, according to the present invention, may be 20.5% to 30%. In an example embodiment, the porosity ($P_c$) of the positive electrode active material layer may be 20.5% to 26%. When the porosity of the positive electrode active material layer is 20% or less, the impregnation of the cylindrical secondary battery may be reduced. When the porosity of the positive electrode active material layer is too large, increase of resistance and reduction of output may be caused.

For a sample in the above composition applied onto an electrode with a predetermined area, the porosity may be calculated by Mathematical Equation 1 below using a ratio of a density obtained by measuring the volume and mass of the positive electrode active material layer and a theoretical density of solid content in the coating composition.

$$\text{Porosity (\%)} = \{1-(\text{actual density})/(\text{theoretical density})\} \times 100 \qquad \text{[Mathematical Equation 1]}$$

In addition, the porosity may be measured through absorption of N2 gas using a BET instrument.

The loading amount ($L_c$) of the positive electrode active material layer, according to the present invention, may be 600 mg/2500 mm$^2$ to 700 mg/2500 mm$^2$. In an example embodiment, the loading amount ($L_c$) of the positive electrode active material layer may be 600 mg/2500 mm$^2$ to 690 mg/2500 mm$^2$. In an example embodiment, the loading amount ($L_c$) of the positive electrode active material layer may be 645 mg/2500 mm$^2$ to 685 mg/2500 mm$^2$. The positive electrode plate including the positive electrode active material layer may be a large-sized positive electrode plate, which may be applied to a large-sized cylindrical secondary battery.

**(2) Negative Electrode Plate**

The negative electrode plate according to the present invention may have a structure in which a negative electrode active material layer is formed on one side or both sides of a negative electrode current collector in a long sheet shape, and the negative electrode active material layer may include a negative electrode active material, a conductive material, and a binder.

In particular, the positive electrode active material, the conductive material, and the binder may be dispersed in a solvent such as dimethylsulfoxide (DMSO), isopropyl alcohol, N-methylpyrrolidone (NMP), acetone, water, etc., to prepare a negative electrode slurry, and the prepared negative electrode slurry is applied onto one side or both sides of the negative electrode current collector in a long sheet shape, and the solvent of the negative electrode slurry is removed through a drying process, and then rolling is performed to prepare the negative electrode plate. Meanwhile, the negative electrode plate including a non-coated part may be prepared in a method in which the negative electrode slurry is not applied onto a partial region of the negative electrode current collector, for example, one end portion of the negative electrode current collector, during application of the negative electrode slurry.

A compound capable of reversible intercalation and deintercalation of lithium may be used as the negative electrode active material. Particular examples of the negative electrode active material may include a carbon material including artificial graphite, natural graphite, a graphitized carbon fiber, amorphous carbon, etc.; a silicon-based material including Si, a Si-Me alloy (where, Me is one or more selected from the group consisting of Al, Sn, Mg, Cu, Fe, Pb, Zn, Mn, Cr, Ti, and Ni), $SiO_y$ (where, $0<y<2$), a Si-C composite, etc.; a lithium metal thin film; a metal material capable of alloying with lithium such as Sn, Al, etc., and any one thereof or a mixture of two or more thereof may be used.

The negative electrode plate according to the present invention may include a silicon-based negative electrode active material. The silicon-based negative electrode active material may include Si, a Si-Me alloy (where, Me is one or more selected from the group consisting of Al, Sn, Mg, Cu, Fe, Pb, Zn, Mn, Cr, Ti, and Ni.), $SiO_y$ (where, $0<y<2$), a Si-C composite, or a combination thereof, and preferably, may be $SiO_y$ (where, $0<y<2$). Since the silicon-based negative electrode active material has high theoretical capacity, if the silicon-based negative electrode active material is included, capacity characteristics may be improved.

The silicon-based negative electrode active material may be doped with a Mb metal, and at this time, the Mb metal may be a Group 1 metal element, a Group 2 metal element, and particularly, Li, Mg, etc. In particular, the silicon-based negative electrode active material may be Si, $SiO_y$ (where, $0<y<2$), a Si-C composite, etc. which are doped with the Mb metal. The metal-doped silicon-based negative electrode active material may rather have a decreased active material capacity, due to the doping element, but have high efficiency, and may thus provide high energy density.

The silicon-based negative electrode active material may further include a carbon-coating layer on a particle surface. At this time, the carbon coating amount may be 20 wt% or less, and preferably 1 to 20 wt% on the basis of the total weight of the silicon-based negative electrode active material.

The negative electrode plate may further include a carbon-based negative electrode active material, as needed, as the negative electrode active material. The carbon-based negative electrode active material may be, for example, artificial graphite, natural graphite, a graphitized carbon fiber, amorphous carbon, soft carbon, hard carbon, etc., but is not limited thereto.

When a mixture of the silicon-based negative electrode active material and the carbon-based negative electrode active material is used as the negative electrode active material, a mixed ratio of the silicon-based negative electrode active material and the carbon-based negative electrode active material may be a weight ratio of 1:99 to 20:80, preferably 1:99 to 15:85, and more preferably 1:99 to 10:90.

The negative electrode active material may be included in an amount of 80 wt% to 99 wt%, preferably 85 wt% to 99 wt%, and more preferably 90 wt% to 99 wt% on the basis of the total weight of the negative electrode active material layer.

Meanwhile, as the negative electrode current collector, negative electrode current collectors, generally used in the relevant art, may be used, and for example, copper, stainless steel, aluminum, nickel, titanium, calcined carbon, copper or stainless steel that is surface-treated with carbon, nickel, titanium, silver, etc., an aluminum-cadmium alloy, etc. may be used. The negative electrode current collector may generally have a thickness of 3 to 500 $\mu$m, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fiber body, etc.

The conductive material may be used to provide conductivity to a negative electrode, and any material that does not cause chemical change and conducts electrons may be used in the battery without particular limitation. Particular examples may be graphite such as natural graphite or artificial graphite; a carbon-based material including carbon black, acetylene black, ketjen black, channel black, furnace black, lamp black, thermal black, a carbon fiber, carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included in an amount of 1 wt% to 30 wt%, preferably 1 wt% to 20 wt%, and more preferably 1 wt% to 10 wt% on the basis of the total weight of the negative electrode active material layer.

The binder serves to improve binding between the negative electrode active material particles and adhesion between the negative electrode active material and the negative electrode current collector. Particular examples may include polyvinylidene fluoride (PVDF), vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, or various copolymers thereof, and any one alone or a mixture of two or more thereof may be used. The binder may be included in an amount of 1 wt% to 30 wt%, preferably 1 wt% to 20 wt%, and more preferably 1 wt% to 10 wt% on the basis of the total weight of the negative electrode active material layer.

## (3) Separator

The separator according to the present invention separates the negative electrode and the positive electrode, and provides a movement path of lithium ions, and any separator may be used, without particular limitation, as long as it is generally used in a lithium secondary battery as a separator. In particular, as the separator, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may be used in order to secure heat resistance or mechanical strength.

### Battery Can and Sealing Body

The battery can according to the present invention may be a container with an opening formed on upper side, which may be made of a conductive metal material such as aluminum or steel. The battery can may accommodate the electrode assembly in an inner space through the opening on upper side, and may also accommodate an electrolyte.

The sealing body according to the present invention may serve to seal an open end portion of the battery can, and may seal the opening on upper side of the battery can.

### Electrolyte Solution

The electrolyte solution used in the present invention may include an organic liquid electrolyte, an inorganic liquid electrolyte, a gel-type polymer electrolyte, etc. which may be used in preparation of a lithium secondary battery, and the type is not limited thereto.

For example, the electrolyte solution may include an organic solvent and a lithium salt.

Any organic solvent may be used as the organic solvent without particular limitation as long as it may function as a medium through which ions involved in an electrochemical reaction of the battery may move. In particular, as the organic solvent, an ester-based solvent including methyl acetate, ethyl acetate, $\gamma$-butyrolactone, $\varepsilon$-caprolactone, etc.; an ether-based solvent including dibutyl ether, tetrahydrofuran, etc.; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylene carbonate (EC), propylene carbonate (PC), etc.; an alcohol-based solvent including ethylalcohol, isopropyl alcohol, etc. may be used. Among these, a carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, for the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 2.0 M. When the concentration of lithium salt falls within the above ranges, the electrolyte may have appropriate conductivity and viscosity, and therefore, excellent performance of the electrolyte may be exhibited, and lithium ions may move effectively.

In addition to the above electrolyte solution components, an additive may further be included in the electrolyte solution for the purpose of improving lifetime characteristics of a secondary battery, suppressing reduction of the battery capacity, improving a discharge capacity of the secondary battery, etc. As the additive, various additives for an electrolyte used in a lithium secondary battery may be used, and for example, a halo carbonate-based compound such as fluoroethylene carbonate; a nitrile-based compound such as succinonitrile; a sulfone compound such as 1,3-propanesultone and 1,3-propene sultone; a carbonate-based compound such as vinylene carbonate; or a combination thereof may be used, but the additive is not limited thereto. At this time, the additive may be included in an amount of 0.1 wt% to 10 wt%, and preferably 0.1 wt% to 5 wt% on the basis of the total weight of the electrolyte solution.

Hereinafter, a preparation method of a cylindrical secondary battery according to the present invention is described in more detail.

### Preparation Method of Cylindrical Secondary Battery

The preparation method of a cylindrical secondary battery according to the present invention may include preparing a positive electrode plate (S10); injecting propylene carbonate (PC) into the positive electrode plate to measure an impregnation rate ($mm^3$/sec) represented by [Equation 1] below (S20); disposing a separator between the positive electrode plate in which the impregnation rate, represented by [Equation 1] below, is equal to or greater than a reference rate, and a negative electrode plate, and then winding to form an electrode assembly (S30); accommodating the electrode assembly in a battery can including an open end portion on an upper part (S40); injecting an electrolyte solution into the battery can in which the electrode assembly is accommodated (S50); and sealing the open end portion of the battery can with a sealing body (S60).

[Equation 1]

$$\text{Impregnation rate} = \frac{(P_c/100) \times \eta_{pc} \times V_{pc}}{L_c \times T_c}$$

In Equation 1 above,
$P_c$ is a porosity (%) of the positive electrode active material layer, $\eta_{pc}$ is a viscosity (mg/mm · sec) of the propylene carbonate, $V_{pc}$ is an injection amount ($mm^3$) of the propylene carbonate, $L_c$ is a loading amount (mg/2500 $mm^2$) of the positive electrode active material layer, and $T_c$ is a thickness (mm) of the positive electrode active material layer.

At this time, the step of S10 may include setting the loading amount ($L_c$) of the positive electrode active material layer in Equation 1 above and applying the positive electrode active material layer onto a positive electrode current collector. Since the positive electrode active material layer and the positive electrode current collector are same as previously described, detailed description thereof will be omitted.

Meanwhile, the step of S20 may include setting the injection amount of the propylene carbonate, measuring the thickness of the positive electrode active material layer, and measuring the porosity of the positive electrode active material layer.

In the step of S30, the reference rate may be 13.05 $mm^3$/sec. In an example embodiment, the reference rate may be 13.8 $mm^3$/sec. The positive electrode plate, in which the reference rate falls within the above ranges, may have excellent electrolyte solution impregnation, thereby improving performance of a secondary battery.

## MODE FOR CARRYING OUT THE INVENTION

Hereinafter, examples of the present invention will be described in detail so that those skilled in the art may easily carry out the present invention. However, the present invention may be implemented in several different forms, and is not limited to the examples to be described herein.

### Example 1

A first positive electrode active material which is a lithium composite transition metal oxide (Li ($Ni_{0.94}Mn_{0.03}Co_{0.03}$) and $D_{50}$ of 3.7 $\mu$m to 4.2 $\mu$m) in a single particle form and a second positive electrode active material which is a lithium composite transition metal oxide (Li ($Ni_{0.97}Mn_{0.02}Co_{0.005}$) and $D_{50}$ of 10.3 $\mu$m to 11.5 $\mu$m) in a secondary particle were mixed in a weight ratio of 6:4 to prepare a positive electrode active material.

The positive electrode active material: a conductive material: a PVDF binder were mixed in a weight ratio of 97.8:0.6:1.6 in N-methyl-2-pyrrolidone (NMP) to prepare a positive electrode slurry. At this time, a carbon nanotube was used as the conductive material.

The prepared positive electrode slurry was applied onto a positive electrode current collector (Al) thin film in a loading amount of 638 mg/2500 $mm^2$ to prepare a positive electrode active material layer. After this, the positive electrode active material layer and the positive electrode current collector were dried and roll-pressed to prepare a positive electrode plate including the positive electrode active material layer having a porosity of 20.50% and a thickness of 155.7 $\mu$m.

### Example 2

A positive electrode plate was prepared in the same method as that of Example 1, except that the positive electrode active material layer and the positive electrode current collector were roll-pressed such that the porosity and the thickness of the positive electrode active material layer were respectively 21.00% and 156.5 $\mu$m.

### Example 3

A positive electrode plate was prepared in the same method as that of Example 1, except that the positive electrode active material layer and the positive electrode current collector were roll-pressed such that the porosity and the thickness of the positive electrode active material layer were respectively 21.50% and 157.5 $\mu$m.

### Example 4

A positive electrode plate was prepared in the same method as that of Example 1, except that the positive electrode active material layer and the positive electrode current collector were roll-pressed such that the porosity and the thickness of the positive electrode active material layer were respectively 22.00% and 158 $\mu$m.

### Comparative Example 1

A positive electrode plate was prepared in the same method as that of Example 1, except that the positive electrode active material layer and the positive electrode current collector were roll-pressed such that the porosity and the thickness of the positive electrode active material layer were respectively 20.00% and 155 $\mu$m.

**Comparative Example 2**

A positive electrode active material: a conductive material: a PVDF binder were mixed in a weight ratio of 97.8:0.6:1.6 in N-methyl-2-pyrrolidone (NMP) to prepare a positive electrode slurry. At this time, as the positive electrode active material, a lithium composite transition metal oxide (Li ($Ni_{0.94}Mn_{0.03}Co_{0.03}$) and $D_{50}$ of 2.9 $\mu$m to 3.5 $\mu$m) in a single particle form was used, and as the conductive material, a carbon nanotube was used.

The prepared positive electrode slurry was applied onto a positive electrode current collector (Al) thin film in a loading amount of 635.89 mg/2500 mm$^2$ to prepare a positive electrode active material layer. After this, the positive electrode active material layer and the positive electrode current collector were dried and roll-pressed to prepare a positive electrode plate including the positive electrode active material layer having a porosity of 21.00% and a thickness of 162.2 $\mu$m.

**Comparative Example 3**

A first positive electrode active material which is a lithium composite transition metal oxide (Li ($Ni_{0.94}Mn_{0.03}Co_{0.03}$) and $D_{50}$ of 3.7 $\mu$m to 4.2 $\mu$m) in a single particle form and a second positive electrode active material which is a lithium composite transition metal oxide (Li ($Ni_{0.97}Mn_{0.02}Co_{0.005}$) and $D_{50}$ of 10.3 $\mu$m to 11.5 $\mu$m) in a secondary particle form were mixed in a weight ratio of 8:2 to prepare a positive electrode active material.

The positive electrode active material: a conductive material: a PVDF binder were mixed in a weight ratio of 97.8:0.6:1.6 in N-methyl-2-pyrrolidone (NMP) to prepare a positive electrode slurry. At this time, a carbon nanotube was used as the conductive material.

The prepared positive electrode slurry was applied onto a positive electrode current collector (Al) thin film in a loading amount of 643.57 mg/2500 mm$^2$ to prepare a positive electrode active material layer. After this, the positive electrode active material layer and the positive electrode current collector were dried and roll-pressed to prepare a positive electrode plate including the positive electrode active material layer having a porosity of 21.00% and a thickness of 161.5 $\mu$m.

**Experimental Example 1: Calculation of Impregnation Rate**

The impregnation rate of each of the positive electrode plates prepared according to Examples 1 to 4 and Comparative Examples 1 to 3 were calculated by [Equation 1] below, and listed in Table 1 below.

$$[Equation\ 1]$$

$$\text{Impregnation rate} = \frac{(P_c/100) \times \eta_{pc} \times V_{pc}}{L_c \times T_c}$$

In Equation 1 above,

$P_c$ is a porosity (%) of the positive electrode active material layer, $\eta_{pc}$ is a viscosity (mg/mm · sec) of the propylene carbonate, $V_{pc}$ is an injection amount (mm$^3$) of the propylene carbonate, $L_c$ is a loading amount (mg/2500 mm$^2$) of the positive electrode active material layer, and $T_c$ is a thickness (mm) of the positive electrode active material layer.

At this time, the injection amount of the propylene carbonate is 1 mm$^3$, and the viscosity is 2.53 mg/mm · sec.

[Table 1]

| | Example 1 | Example 2 | Example 3 | Example 4 | Comparative Example 1 | Comparative Example 2 | Comparative Example 3 |
|---|---|---|---|---|---|---|---|
| Porosity (%) | 20.50 | 21.00 | 21.50 | 22.00 | 20.00 | 21.00 | 21.00 |
| Viscosity (mg/mm · sec) | 2.53 | 2.53 | 2.53 | 2.53 | 2.53 | 2.53 | 2.53 |
| Injection amount (mm$^3$) | 1 | 1 | 1 | 1 | 1 | 1 | 1 |
| Loading amount (mg/2500mm$^2$) | 638 | 638 | 638 | 638 | 638 | 635.89 | 643.57 |
| Thickness (mm) | 0.1557 | 0.1565 | 0.1575 | 0.158 | 0.155 | 0.1622 | 0.1615 |
| Impregnatio n rate (mm$^3$/sec) | 13.05 | 13.30 | 13.53 | 13.80 | 12.79 | 12.88 | 12.78 |

Referring to Table 1 above, it can be seen that the impregnation rates of the positive electrode plates prepared according to Examples 1 to 4 were higher than those of the positive electrode plates prepared according to Comparative Examples 1 to 3.

For example, the impregnation rate according to Comparative Example 1, where the active material composition was the same as that of Examples 1 to 4, but the porosity was different therefrom, was 12.79 mm$^3$/sec, which is lower than the impregnation rate of 13.05 mm$^3$/sec according to Example 1.

Also, it can be seen that the impregnation rates according to Comparative Examples 2 and 3, where the positive electrode active material compositions were different from those of Examples 1 to 4, were less than 13.00 mm$^3$/sec.

Hereinafter, performances of the cylindrical secondary batteries, including the positive electrode plates according to Examples 1 to 4 and Comparative Examples 1 to 3 having different impregnation rates, are compared.

**Experimental Example 2: Measurement of Capacity Retention Rate**

Lithium secondary batteries including the positive electrodes respectively prepared according to Examples 1 to 4 and Comparative Examples 1 to 3 were prepared, and each capacity retention rate was measured and listed in FIG. 1 below.

In particular, a negative electrode active material (a mixture of graphite: SiO in a weight ratio of 96.6:3.4): a conductive material (super C): a binder (a styrene-butadiene rubber (SBR)) were mixed in water in a weight ratio of 98:1:1 to prepare a negative electrode slurry. The prepared negative electrode slurry was applied onto a negative electrode current collector (Cu thin film), and dried and roll-pressed to prepare a negative electrode plate.

A separator was disposed between the positive electrode plate and the negative electrode plate, prepared as described above, to be laminated in order of separator/positive electrode plate/separator/negative electrode plate, and then the laminate was wound to prepare an electrode assembly in a jelly-roll-type. The electrode assembly, prepared as described above, was inserted in a cylindrical battery can, and then an electrolyte solution was injected to prepare a 4680 cell.

100 cycles (n=100) of charging and discharging were performed on each of the secondary batteries prepared as described above, where 1 cycle (n=1) refers to charging and discharging at 45 °C with 0.33 C and in a voltage rage of 2.5 V to 4.35 V, and then the capacity retention rate was measured using a PNE cycler.

Referring to FIG. 1, it can be seen that the secondary batteries according to Examples 1 to 4, having an impregnation rate of 13.05 mm$^3$/sec or greater, had lower capacity retention rates than the secondary batteries according to Comparative Examples 1 to 3 having an impregnation rate less than 13.05 mm$^3$/sec. In particular, it can be seen that the secondary battery according to Comparative Example 4, having the lowest impregnation rate, had a capacity retention rate significantly lower than those of the secondary batteries according to Examples 1 to 3.

**Claims**

1. A cylindrical secondary battery comprising:

   an electrode assembly in which a positive electrode plate, a negative electrode plate, and a separator disposed between the positive electrode plate and the negative electrode plate are wound in one direction;
   a battery can in which the electrode assembly is accommodated;
   an electrolyte solution injected into the battery can; and
   a sealing body which seals an open end portion of the battery can,
   wherein the positive electrode plate includes a positive electrode active material layer formed on a positive electrode current collector, and
   an impregnation rate represented by [Equation 1] below, measured by injecting propylene carbonate into the positive electrode plate, is 13.05 mm$^3$/sec or greater:

   [Equation 1]

   $$\text{Impregnation rate} = \frac{(P_c / 100) \times \eta_{pc} \times V_{pc}}{L_c \times T_c}$$

   where, in Equation 1 above,
   $P_c$ is a porosity (%) of the positive electrode active material layer, $\eta_{pc}$ is a viscosity (mg/mm · sec) of the propylene carbonate, $V_{pc}$ is an injection amount (mm$^3$) of the propylene carbonate, $L_c$ is a loading amount (mg/2500 mm$^2$) of

the positive electrode active material layer, and $T_c$ is a thickness (mm) of the positive electrode active material layer.

2. The cylindrical secondary battery of claim 1, wherein the positive electrode active material layer comprises a first positive electrode active material in a single particle form including 30 or less nodules, and
an average particle diameter $D_{50}$ of the first positive electrode active material is 3 $\mu$m to 8 $\mu$m.

3. The cylindrical secondary battery of claim 2, wherein an average particle diameter $D_{50}$ of the nodules is 0.5 $\mu$m to 5 $\mu$m.

4. The cylindrical secondary battery of claim 2, wherein the first positive electrode active material comprises a lithium nickel-based oxide represented by Chemical Formula 1 below:

[Chemical Formula 1] $\qquad Li_aNi_bCo_cM^1_dM^2_eO_2$

where, in Chemical Formula 1 above, $M^1$ is Mn, Al, or a combination thereof, $M^2$ is one or more selected from the group consisting of Zr, W, Ti, Mg, Ca, Sr, and Ba, and $0.8 \leq a \leq 1.2$, $0.8 \leq b < 1$, $0 < c < 0.2$, $0 < d < 0.2$, and $0 \leq e \leq 0.1$.

5. The cylindrical secondary battery of claim 2, wherein the positive electrode active material layer further comprises a second positive electrode active material in a secondary particle form,

the second positive electrode active material has a form of aggregation of primary particles, and
the second positive electrode active material has an average particle diameter of 10 $\mu$m to 20 $\mu$m.

6. The cylindrical secondary battery of claim 1, wherein the positive electrode active material layer has a bimodal particle size distribution on a cumulative volume particle size distribution graph.

7. The cylindrical secondary battery of claim 1, wherein the positive electrode active material layer has a porosity ($P_c$) of 20% to 30%.

8. The cylindrical secondary battery of claim 1, wherein the positive electrode active material layer has a loading amount ($L_c$) of 600 mg/2500 mm$^2$ to 700 mg/2500 mm$^2$.

9. The cylindrical secondary battery of claim 1, wherein the negative electrode plate comprises a silicon-based negative electrode active material.

10. The cylindrical secondary battery of claim 1, wherein a form factor ratio of the cylindrical secondary battery is 0.4 or greater.

11. The cylindrical secondary battery of claim 1, wherein the cylindrical secondary battery is a 46110 cell, a 4875 cell, a 48110 cell, a 4880 cell, or a 4680 cell.

12. A preparation method of a cylindrical secondary battery, comprising:

preparing a positive electrode plate (S10);
injecting propylene carbonate (PC) into the positive electrode plate to measure an impregnation rate (mm$^3$/sec) represented by [Equation 1] below (S20);
disposing a separator between the positive electrode plate in which the impregnation rate, represented by [Equation 1] below, is equal to or greater than a reference rate, and a negative electrode plate, and then winding to form an electrode assembly (S30);
accommodating the electrode assembly in a battery can including an open end portion on an upper part (S40);
injecting an electrolyte solution into the battery can in which the electrode assembly is accommodated (S50); and
sealing the open end portion of the battery can with a sealing body (S60),

[Equation 1]

$$\text{Impregnation rate} = \frac{(P_c / 100) \times \eta_{pc} \times V_{pc}}{L_c \times T_c}$$

wherein, in Equation 1 above,

$P_c$ is a porosity (%) of the positive electrode active material layer, $\eta_{pc}$ is a viscosity (mg/mm · sec) of the propylene carbonate, $V_{pc}$ is an injection amount (mm$^3$) of the propylene carbonate, $L_c$ is a loading amount (mg/2500 mm$^2$) of the positive electrode active material layer, and $T_c$ is a thickness (mm) of the positive electrode active material layer.

13. The preparation method of claim 12, wherein the reference rate is 13.05 mm$^3$/sec.

[FIG. 1]

## INTERNATIONAL SEARCH REPORT

| International application No. |
|---|
| **PCT/IB2024/060466** |

| | |
|---|---|
| **A. CLASSIFICATION OF SUBJECT MATTER** | |
| **H01M 10/04**(2006.01)i; **H01M 4/525**(2010.01)i; **H01M 4/505**(2010.01)i; **H01M 4/38**(2006.01)i; **H01M 4/36**(2006.01)i; **H01M 4/02**(2006.01)i | |
| According to International Patent Classification (IPC) or to both national classification and IPC | |

**B. FIELDS SEARCHED**

Minimum documentation searched (classification system followed by classification symbols)

H01M 10/04(2006.01); H01G 11/06(2013.01); H01G 11/28(2013.01); H01M 10/0525(2010.01); H01M 10/48(2006.01); H01M 4/13(2010.01); H01M 4/133(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전지(battery), 양극(positive electrode), 전해액(electrolyte), 프로필렌 카보네이트 (propylene carbonate), 함침 속도(impregnation rate)

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0113419 A (LG CHEM, LTD.) 12 October 2017 (2017-10-12)<br>See paragraphs [0052]-[0112]. | 1-13 |
| A | KR 10-2016-0150324 A (VITZROCELL CO., LTD.) 30 December 2016 (2016-12-30)<br>See claims 5 and 10. | 1-13 |
| A | JP 2020-053282 A (SEKISUI CHEM. CO., LTD.) 02 April 2020 (2020-04-02)<br>See paragraphs [0049]-[0057]. | 1-13 |
| A | KR 10-2023-0031166 A (LG ENERGY SOLUTION, LTD.) 07 March 2023 (2023-03-07)<br>See paragraphs [0069]-[0077]. | 1-13 |
| A | JP 2013-062226 A (HITACHI LTD.) 04 April 2013 (2013-04-04)<br>See claims 1 and 4. | 1-13 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 February 2025** | **11 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/IB2024/060466**

| Patent document cited in search report | | | Publication date (day/month/year) | Patent family member(s) | | | Publication date (day/month/year) |
|---|---|---|---|---|---|---|---|
| KR | 10-2017-0113419 | A | 12 October 2017 | CN | 108886172 | A | 23 November 2018 |
| | | | | CN | 108886172 | B | 16 March 2021 |
| | | | | EP | 3361548 | A1 | 15 August 2018 |
| | | | | EP | 3361548 | A4 | 16 January 2019 |
| | | | | EP | 3361548 | B1 | 29 July 2020 |
| | | | | JP | 2018-527727 | A | 20 September 2018 |
| | | | | JP | 6689512 | B2 | 28 April 2020 |
| | | | | KR | 10-2005505 | B1 | 30 July 2019 |
| | | | | PL | 3361548 | T3 | 16 November 2020 |
| | | | | US | 10541421 | B2 | 21 January 2020 |
| | | | | US | 2018-0205090 | A1 | 19 July 2018 |
| | | | | WO | 2017-171448 | A1 | 05 October 2017 |
| KR | 10-2016-0150324 | A | 30 December 2016 | KR | 10-1696228 | B1 | 13 January 2017 |
| JP | 2020-053282 | A | 02 April 2020 | None | | | |
| KR | 10-2023-0031166 | A | 07 March 2023 | CN | 117716526 | A | 15 March 2024 |
| | | | | EP | 4365973 | A1 | 08 May 2024 |
| | | | | JP | 2024-526866 | A | 19 July 2024 |
| | | | | US | 2024-0347726 | A1 | 17 October 2024 |
| | | | | WO | 2023-027539 | A1 | 02 March 2023 |
| JP | 2013-062226 | A | 04 April 2013 | JP | 5282148 | B2 | 04 September 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230141417
- KR 1020240118139